(19) **Europäisches Patentamt / European Patent Office / Office européen des brevets**

(11) **EP 1 317 573 B1**

(12) **EUROPEAN PATENT SPECIFICATION**

(45) Date of publication and mention
of the grant of the patent:
**18.02.2009 Bulletin 2009/08**

(21) Application number: **01955754.5**

(22) Date of filing: **13.08.2001**

(51) Int Cl.:
*D01F 2/02* (2006.01)   *C08J 5/18* (2006.01)
*C08L 1/02* (2006.01)   *A22C 13/00* (2006.01)
*C08B 1/00* (2006.01)

(86) International application number:
**PCT/PL2001/000069**

(87) International publication number:
**WO 2002/022924 (21.03.2002 Gazette 2002/12)**

(54) **PROCESS FOR PRODUCING FIBRES, FILM, CASINGS AND OTHER PRODUCTS FROM MODIFIED SOLUBLE CELLULOSE**

VERFAHREN ZUR HERSTELLUNG VON FASERN, FOLIEN, HÜLLEN UND ANDEREN PRODUKTEN AUS MODIFIZIERTER LÖSLICHER CELLULOSE

PROCEDE DE PRODUCTION DE FIBRES, DE FILMS, DE BOITIERS ET D'AUTRES PRODUITS A PARTIR DE CELLULOSE SOLUBLE MODIFIEE

(84) Designated Contracting States:
**AT BE CH CY DE DK ES FI FR GB GR IE IT LI LU MC NL PT SE TR**

(30) Priority: **13.09.2000 PL 34252500**

(43) Date of publication of application:
**11.06.2003 Bulletin 2003/24**

(73) Proprietor: **Instytut Biopolimeròw I Wlókien Chemicznych**
**90-570 Lodz (PL)**

(72) Inventors:
• **STRUSZCZYK, Henryk**
**PL-95-100 Zgierz (PL)**
• **WAWRO, Dariusz**
**PL-91-404 Lódz (PL)**

• **URBANOWSKI, Alojzy**
**PL-92-015 Lódz (PL)**
• **MIKOLAJCZYK, Wlodzimierz**
**PL-90-629 Lódz (PL)**
• **STAROSTKA, Pawel**
**PL-93-030 Lódz (PL)**

(74) Representative: **Fritz & Brandenburg**
**Patentanwälte**
**Im Mediapark 4d**
**Postfach 19 04 80**
**50501 Köln (DE)**

(56) References cited:
**EP-A- 0 872 489**      **EP-A- 0 918 101**
**WO-A-01/30855**

## Description

The subject of the invention is a process for producing fibres, film, casings and other products from modified soluble cellulose.

US Patent No. 4,634,470, corresponding to Japanese Patent No. 58-244337 as well as publications in "Polymer Journal", Vol. 20, pp.447-457, 1988, and in "Cellulose Chemistry and Technology", Vol. 24, pp. 23-31, 237-249, 1990, disclose a process of manufacturing cellulose fibres from cellulose pulp by means of the steam explosion method. In this process cellulose is initially treated in an alkaline or acid medium to obtain a polymer with an average degree of polymerization of 200-700, and then this polymer is subjected to a steam explosion treatment at temperature in the range from 100 to 350° C under pressure of 1 to 25 MPa. The treated cellulose dissolves in an aqueous alkaline solution from which fibres can be made by coagulation in an acid coagulation bath. This process does not allow one to obtain modified cellulose with sufficiently high solubility in alkaline solutions. Moreover, the process is technologically and mechanically complicated and energy - consuming.

Polish Patents No. 167776 and 167519 specify a method of producing fibres, film and other products from soluble cellulose obtained on the way of enzymatic treatment by means of cellulolytic enzymes of the cellulase type originated from fungi Aspergillus Niger IBT. The enzymatic treatment of cellulose pulp is carried out at temperatures not lower than 10°C in a time not shorter than 1 minute at pH as high as 4-7. The modified cellulose pulp is dissolved in aqueous alkaline solutions at a temperature in the -10°C to 10°C range during 15 - 2880 minutes and the obtained cellulose solution is filtered, deaerated and coagulated in an acidic bath.

Obtaining of a good solubility of the modified cellulose pulp in the enzymatic method is rather difficult and, besides, the use of expensive enzymes is necessary.

Producing of a spinnable cellulose solution requires a long mixing time and a low temperature during storage. The obtained solution demonstrate a low stability.

Polish Patent Applications P. 323281 and P. 324910 disclose a process of manufacturing cellulose fibres, film and other products like casings or beads from alkaline solutions of cellulose. In this process cellulose is initially hydrothermally treated at 100 - 200°C under pressures of 0.1-1.5 MPa during 60-600 minutes while the water to cellulose weight ratio is kept at not less than 1 : 1. The obtained hydrothermally treated cellulose pulp is dissolved in aqueous hydroxides of alkali metals at a temperature not lower than 0°C during 1 - 300 minutes to achieve a homogeneous alkaline solution with the cellulose concentration 5 - 10% wt and the hydroxide concentration not exceeding 10% by weight a filterability coefficient not exceeding 1000 and stability at least 48 hours at 20°C. The alkaline solution is next filtered and deaerated, and products are formed from the solution in a coagulation bath, consisting of an aqueous solution of sulphuric acid in the concentration range 1 - 30% wt. The obtained products are washed with water to a neutral reaction and possibly dried.

In EP 0 918 101 A formed cellulose products such as fibers and tubular sheathing are described, which can be obtained by a process comprising the steps:

(a) subjecting cellulose to hydrothermal treatment at 100-200°C and 0.1 - 1.5 MPa with a water/cellulose ratio of at least 1. (b) dissolving the treated cellulose at a temperature of at least 0 degrees C in aqueous alkali to give a homogeneous solution with 5 - 10 wt% cellulose and not more than 10 wt% alkali hydroxide and (c) forming the solution and coagulating it by contact with a 1 - 30 wt% aqueous solution of inorganic and/or organic acid.

The known manufacturing processes of cellulose products like fibres, film, casings from alkaline solutions of hydrothermally treated cellulose do not provide for obtaining of a cellulose pulp with a controlled, assumed structure. The molecular characteristics i.e. average polymerization degree, polydispersity and the super molecular characteristics like crystallinity structure, energy of hydrogen bonds and themorphologic characteristics like the adequately developed capillary system do not warrant a complete dissolution in aqueous alkali and sufficiently good properties of the spinning solutions expressed as filterability, viscosity and stability of the solution. The fibres, film, casings and other products obtained according to the known methods do not manifest optimal mechanical and useful properties.

The process for producing fibres, film, casings and other products from modified soluble cellulose according to the present invention consists in that the initial cellulose pulp is first hydrothermally treated at 100-200 C under a pressure of 0.1-1.5 MPa with the water/cellulose weight ratio not lower than 1: 1 in the presence of a complex activator composed of one of the following compounds or their blends: ascorbic acid, acetic acid, citric acid, formic acid, carbonic acid ammonium hydroxide, diethanolamine, guanidine carbonate, ammonium chloride, sodium citrate, wherein the activator/cellulose weight ratio is at least 0.001% by weight preferably 0.01-0.5 % by weight. The obtained modified cellulose is characterized by a controlled structure with average polymerization degree not lower than 200, a polydispersity in the range of 1.5 - 3.0, water retention value not lower than 50%, hydrogen bonds energy in the 10-20kJ/mol range and a content of insoluble particle not exceeding 2%. Such cellulose, dried or never dried is dissolved in aqueous solution of alkali metal hydroxides preferably sodium hydroxide at temperatures not lower than 0°C preferably 3-8 C= during 1 - 120 minutes to obtain a homogenous cellulose solution with following properties: cellulose concentration not lower than1%, preferably 6-8%, hydroxide content below 10% wt, filterability coefficient not exceeding 1000, solution stability at least 48 hours at temperature not lower than 15°C and ball viscosity not lower than 10 seconds preferably 30 - 100 seconds. The obtained cellulose solution is filtered, deaerated and coagulated in water or an aqueous solution of an acid preferably sulphuric acid in the 0.1-30% wt concentration range at a temperature10-30°C. The manufactured fibres, foils, casings or other products are washed with water to a neutral reaction and finished in a standard way.

The obtained products like fibres foils or casings according to the invention are preferably plasticized at a temperature in the range 20 - 95°C preferably 60 -95°C in water or a water solution of an acid like hydrochloric or sulphuric and/or a plastifying agent like glycol, glycerol with simultaneous drawing by at least 10%, preferably 40-100%.

According to the invention, it is advantageous before the hydrothermal treatment, todefibrate and swell the cellulose pulp in water at a temperature not lower than 10°C possibly with the addition of a wetting agent during 1 minute to 24 hours preferably with agitation.

The aqueous solution of alkali metal hydroxides used for the dissolving of cellulose pulp may additionally contain zinc compounds preferably zinc oxide in the concentration of at least 0.1 % by weight and/or urea in the concentration of at least 1 % by weight.

An advantage of the invention is the controlled hydrothermal treatment of the cellulose aimed at obtaining a modified product entirely soluble in aqueous alkali able to produce stable spinning solutions suitable for the manufacture of cellulose products like fibres, film, casings and fibrides. The controlled modification of the cellulose pulp is only possible as result of the application in this invention of the complex activators combined from Lewis acids and bases as well as their salts. The activators provide for a controlled lowering of the average polymerization degree to an assumed level with simultaneous weakening of both inter- and intramolecular bonds. The activators, applied according to the invention, enable to obtain a modified cellulose pulp with a low, assumed polydispersity particularly in the 1.5-3.0 range which has a fundamental impact on the properties of both the spinning solutions and the products made thereof. During the hydrothermal modification of cellulose the primarily proceeding process is the statistic degradation of the polymer with only insignificant depolimerization producing soluble oligosacharides, which occur in as little as 0.1 - 2% by weight of the cellulose.

The process according to the invention is environmentally friendly as the fibres, film, casings and other products are manufactured without the use of toxic chemicals using machinery and equipment typical for the wet spinning process like viscose method. Owing to the application of the complex activators a cellulose pulp is obtained with modified molecular - supermolecular and morphological characteristics, including the lowered energy of hydrogen bonds and the unique ability to direct dissolution in aqueous alkali solutions. The obtained alkaline solutions of cellulose are characterized by low Kw* filterability coefficient values, suitable viscosity and spinnability enabling the forming procedure of fibres, film, casings and fibrides. The addition of zinc compounds and urea to the alkaline solutions of cellulose provides for better stability and spinnability of the solutions.

The defibration and swelling of the initial cellulose, according to the invention, particularly in the presence of wetting agents improves the access and diffusion to the cellulose capillary system for the highly energetic hydrolyzing agent i.e. water. This facilitates remarkably the weakening and / or breaking of the hydrogen bonds in cellulose.

For the determination of the properties of cellulose and the products made of it following methods were used:

- Average degree of polymerization $\overline{DP}_v$ was determined according to the method described in the periodical Das Papier No. 12, page 187, 1958.
- Water retention value WRV was determined according to the method described in the periodical Cellulose Chemistry and Technology, Vol. 14, page 893, 1980,
- Crystallinity index CrI was determined according to the X-ray method specified in the monograph Mikrostruktura Włókna, Wydawnictwo Naukowo - Techniczne, Warszawa, page 68, 1988,
- Filterability coefficient Kw* - was determined according to the standard BN-70/7516-03,
- Mechanical properties of the fibres and film were determined according to the standards PN-83/P-04653 and PN-84/D-04654,
- Content of the insoluble part of cellulose was determined in the following way: the alkaline solution of cellulose is diluted with a solvent in the weight proportion 1:1, such solution is centrifuged at 8000 rpm at a temperature 1-2 °C during 30 minutes. The obtained sediment is washed with the solvent and again centrifuged under the same conditions and then four - fold washed and neutralized with acid. After neutralization the sediment is washed with distilled water and dried at 105°C to constant weight.

The quantity of insoluble part is calculated from the equation:

$$S\% = \frac{w \cdot 100}{a}$$

where:

w - weight of the sediment after drying,

a    - content of polymer in 100 grams of the diluted cellulose solution before centrifuging.

The subject of the invention is illustrated by the following examples which are intended not to restrict the scope of the invention.

Example 1

404 parts by weight of a cellulose pulp, originated from spruce wood, in form of sheets characterized by an average degree of polymerization $\overline{DP}v$ = 619, a polydispersity degree $P_d$ = 3.37, a crystallinity index CrI = 71.1 %, a water retention value WRV = 66.8, a hydrogen bond energy $E_H$ = 11.8 - 20.6 kJ / mol and a moisture content of 7.4 % were put into a vessel with agitator and wetted with a solution composed of 5100 parts by weight of water, 2 parts by weight of ascorbic acid and 0.9377 part by weight of ammonia water with 25% concentration having a pH of 4.95. The mixture was left for 20 hours at 20°C for complete wetting and was next agitated at 1100 rpm during 3 minutes. The obtained suspension wast put into an autoclave with agitator. The hydrothermal treatment was carried out during 165 minutes at 165°C and under the pressure of 0.6 MPa with the agitator on at 60 rpm. The obtained suspension of modified cellulose was filtered and washed with water to a complete removal of byproducts. 1072 parts by weight of modified cellulose having a water content of 65.5% by weight, $\overline{DP}_V$=348, Pd=2.30, CrI=65.7%, WRV=74.5% and $E_H$=16.9 - 20.6 kJ/mol were obtained. Next 105 parts by weight of the modified cellulose with the same water content were introduced into a mixer containing 42 parts by weight of water and the content was cooled down to 1°C after which, under continuous stirring 453 parts by weight of aqueous sodium hydroxide solution were introduced. The solution had a concentration of 10.2 by weight NaOH, and a temperature of 0°C and contained 25 parts by weight of urea and 4.2 parts by weight of zinc oxide. The process of dissolution was carried out for 60 minutes. An alkaline solution of the modified cellulose was obtained at temperature of 8°C, characterized by an α-cellulose content of 6.23% by weight and a sodium hydroxide content of 7.91% by weight, a ball viscosity at 8°C of 141 seconds, a reduced value of the filterability coefficient Kw* equal to 232 and stability of 54 hours at 15°C. The solution was filtered, 10 hours deaerated at 15°C and then in lab conditions a film was formed from the solution at 20°C. As coagulating bath a 12% by weight sulphuric acid was applied. The obtained film was stretched by 40% in an aqueous plasticizeing bath containing 5% by weight of glycerol. The film was afterwards washed and dried.
39.1 parts by weight of a cellulosic film with a moisture content of 10%, a thickness of 0.035 mm, a strength of 56.8 MPa and an elongation of 6.8% was obtained.

Example 2.

404 parts by weight of cellulose pulp having the properties as disclosed in Example 1 were wetted and defibrated as in Example 1 with an aqueous solution with pH=4.34, composed of 5100 parts by weight of water, 0.1 part by weight of ascorbic acid and 0.0656 parts by weight of acetic acid at a temperature of 25°C. The obtained cellulose suspension was introduced into an autoclave and subjected to hydrothermal treatment at 165°C under the pressure of 0.60 MPa during 165 minutes. The modified cellulose pulp was purified as in Example 1. 1029 parts by weight of a modified cellulose characterized by; a 64.2% water content, $\overline{DP}_V$=321, Pd=2.25, CrI=63.5%, WRV=74.6% and $E_H$=18.3 kJ/mol was obtained. To 99 parts by weight of the modified cellulose pulp 48 parts by weight of water were introduced, the mixture was cooled down to 1°C and then with continuous stirring 453 parts by weight were introduced of an aqueous solution of sodium hydroxide with NaOH concentration of 10.2% by weight and a temperature of 0°C containing 25 parts by weight of urea and 4.2 parts by weight of zinc oxide. The dissolution was carried out during 60 minutes; at the end the temperature was 8°C. An alkaline solution of the modified cellulose characterized by an α-cellulose content of 6.16% by weight, NaOH content of 7.61 % by weight, a ball viscosity at 8°C of 121 seconds, a Kw*=431 and stability of 52 hours at 15°C was obtained. The solution, after filtration and deaeration was used for film forming as in Example 1.
40.2 parts by weight of cellulosic film were obtained with a 12% moisture content, a thickness of 0.037mm, a strength of 54.6 MPa and an elongation of 7.1%.

Example 3.

404 parts by weight of a cellulose pulp having the same properties as in Example 1 were wetted and defibrated as in Example 1 with an aqueous solution with pH=4.30 containing 4900 parts by weight of water, 1 part by weight of formic acid and 1.63 parts by weight of ammonia water with 25% concentration. The obtained suspension of cellulose was introduced into an autoclave and subjected to hydrothermal treatment at 170°C and a pressure of 0.74 MPa for 90 minutes. The obtained modified cellulose was purified as in Example I and dried at 40°C.
479.2 parts by weight of a modified cellulose were obtained having following properties: a moisture content of 23% $\overline{DP}_V$=350, Pd=2.29, CrI=65.8, WRV=74.5 and $E_H$=16.1 kJ/mol. 103 parts by weight of the modified cellulose pulp were introduced into a mixer containing 44 parts by weight of water and the content of the mixer was cooled down to 1 °C as in Example I, and then 453 parts by weight of an aqueous solution of natrium hydroxide with the NaOH concentration 10.2 % by weight containing 25 parts by weight of urea and 4.2 parts by weight of zinc oxide at 0°C were introduced to the mixer. The dissolving process was carried out during 60 minutes to obtain an alkaline solution with 8°C characterized by an α-cellulose content of 6.22% by weight, NaOH concentration of 7.68% by weight, a ball viscosity of 81 seconds and Kw*=220. Such solution after filtration and deaeration was used for the forming of a cellulosic film as in Example I.

83.7 parts by weight of a cellulosic film were obtained with moisture content of 8% by weight, a thickness of 0.018 mm, a strength of 58.8 MPa and an elongation of 5.3%.

Example 4

From 100 parts by weight of an alkaline solution of the modified cellulose obtained as in Example 3, cellulosic casings were formed. The casings were formed with a speed of 10m/min in a coagulating bath at 20°C containing 14% by weight of sulphuric acid and 4.4% of natrium sulphate. Simultaneously a coagulation bath at 20°C containing 14% by weight of sulphuric acid was introduced to the interior of the formed casings. The obtained casings were washed in two consecutive water baths at 60°C and next plastified in a 15% aqueous solution of glycerol at 60 with a simultaneous stretching by 3-5%. The casings were continuously dried at 95° under a tension enabling a 15% shrinkage to achieve.

6.22 parts by weight of cellulosic casings were fabricated with following properties: a moisture content of 7%, a diameter of 22 mm, a wall thickness of 0.036 mm, a longitudinal strength of 58 MPa a transversal strength of 43.5 MPa and an elongation of 33%.

Example 5

800 parts by weight of cellulosic pulp having the properties as in Example 1 were wetted and defibrated like in Example 1 with a solution having pH=4.39 composed of 9979 parts by weight of water 2.57 parts by weight of ascorbic acid, 1.11 parts by weight of a 25% ammonia water and 1.98 parts by weight of ammonia chloride. The prepared cellulose suspension was introduced into an autoclave, where the hydrothermal treatment was performed at 180°C and under the pressure of 0.92 MPa for 65 minutes. The obtained product was purified as in Example 1. 1986 parts by weight of modified cellulose were obtained with following properties: moisture content - 63.6%, $\overline{DP}_v$ = 262, Pd = 2.20, CrI=67.1%, WRV=74.8, $E_H$=18 kJ/ mol and a 0.5% content of insoluble part. 194 parts by weight of such cellulose were mixed with 97 parts by weight of water and cooled down to 1°C in a mixer, to which 870 parts by weight of a 10.2% by weight sodium hydroxide solution at 0°C containing 49.5 parts by weight of urea and 8.3 parts by weight of zinc oxide were next introduced. The dissolution was conducted during 60 minutes and an alkaline solution of cellulose was obtained characterized by a 6.04% wt content of α-cellulose, a 7.78%wt content of NaOH, a ball viscosity of 53 seconds, Kw* = 128 and a stability of 72 hours at 15°C. This solution after filtration and deaeration was used for making cellulosic film as in Example 1.

76.6 parts by weight of a cellulosic film were obtained with 10% moisture content, a thickness of 0.027 mm, a strength of 65.0MPa and an elongation of 15.8%.

Example 6

1000 parts by weight of cellulose pulp having the properties as in Example 1 were wetted and defibrated as in Example 1 with an aqueous solution having pH = 4.40, composed of 12622 parts by weight of water 5.94 parts by weight of citric acid, 5.27 parts by weight of 25% ammonia water and 0.1 part by weight of a natrium salt of dodecylsulphonic acid. The suspension was put into an autoclave and subjected to hydrothermal treatment for 120 minutes at 175°C and a pressure of 0.83 MPa. The product of the treatment was purified as in Example 1. 2425.5 parts by weight of cellulose pulp were obtained having the following properties: a moisture content of 62.5% wt, $DP_v$ = 322, Pd = 2.13, CrI = 64.7, WRV = 76.1 %, $E_H$ = 16.6 kJ/mol. 242.5 parts by weight of such pulp were next put into a mixer, containing 128.7 parts by weight of water. The mixer's content was cooled down to 1°C and next with continuous stirring 1121 parts by weight of an aqueous 10.2%wt NaOH solution containing 61.8 parts by weight of urea and 10.4 parts by weight of zinc oxide at 0°C were added to the mixer. The dissolving was carried out for 60 minutes to obtain an alkaline cellulose solution at 8°C characterized by a cellulose content of 6.13% wt, a NaOH content of 7.83% wt, a ball viscosity of 98 seconds, Kw* = 136, and a stability of 65 hours at 15°C. After filtration and deaeration the solution was used for forming of film as in Example I.

There were obtained 101 parts by weight of cellulose film with 11% moisture content having following properties: thickness 0.025, strength 64.7 MPa, and an elongation of 16.1 % by weight.

Example 7

1000 parts by weight of the alkaline solution of the modified cellulose, prepared as in Example 6 were used for the spinning of cellulosic fibres in a coagulation bath containing 12% wt of sulphuric acid and 4.4% wt of sodium sulphate. A spinneret was applied with 1000 holes each and a 0.065 mm diameter of the holes. The spinning speed was 50m/min and the draw ratio 50%. The continuous fibres were washed in a water bath, a spin finish was applied and the fibres were next dried at 95°C.

There were obtained 66.4 parts by weight of cellulosic fibres with a moisture content of 10%, a linear density of 1.72 dtex, a tenacity of 15.7 cN/tex and elongation of 14.5%.

Example 8

100 parts by weight of an alkaline solution of cellulose as in Example 6 after dilution in the 1:5 proportion were used for manufacturing of cellulosic beads, applying a 100 hole spinneret with 1 mm capillars. The beads were formed at 20°C to a coagulation bath containing 12% wt of sulphuric acid and eventually washed. There were obtained 86 parts by weight of wet beads with 4-5 mm diameter a 7% cellulose content and WRV =523%.

Example 9

404 parts by weight of cellulose pulp having the properties as in Example 1 were wetted and defibrated as in Example 1 with 5048 parts by weight of water at 20°C. The obtained cellulose suspension was put into an autoclave and 1.1 part by weight of formic acid and 1.12 part of guanidine carbonate were added to attain pH = 4.12 of the mixture. Next the hydrothermal treatment was carried out for 165 minutes at 165°C and a pressure of 0.65 MPa. The product was purified as in Example 1. 1010 parts by weight of modified cellulose were obtained having following properties: a water content of 63.7%, $DP_v$ = 328, Pd = 2.27, CrI = 68.6, WRV = 76.9%, $E_H$ = 18.2 kJ/mol and a content of insoluble part of 0.9% by weight. 95 parts by weight of such modified cellulose were mixed with 52 parts by weight of water and cooled down to 1°C and then 453 parts by weight of an aqueous 10.2 % sodium hydroxide solution containing 25 parts by weight of urea and 4.2 parts by weight of zinc oxide at 0°C were added. The dissolving was carried out for 60 minutes to obtain an alkaline cellulose solution at 8°C characterized by an α-cellulose content of 6.24% by weight, a NaOH content of 7.73% by weight, a ball viscosity of 153 seconds, Kw*=211 and a stability of 60 hours at 15°C. From such solution after filtration and deareation, a cellulosic film was formed as in Example 1.
There were obtained 37.2 parts by weight of cellulose film with 10% moisture content, a thickness of 0.027 mm, a strength of 59.099 MPa and an elongation of 14.6%.

Example 10

500 parts by weight of an alkaline cellulose solution as in Example 9 were used for the manufacture of cellulose casings as in Example 4.
There were obtained 31.9 parts by weight cellulose casings with a moisture content of 7%, a diameter of 22 mm, a wall thickness of 0.05 mm, a longitudinal strength of 62 MPa, a transversal strength of 49.5 MPa and an average elongation of 31.1%.

Example 11

1000 parts by weight of an alkaline cellulose solution as in Example 9 were used for producing continuous filaments as in Example 7 applying a 55 m/min. spinning speed and a 45% draw ratio.
There were obtained 61.8 parts by weight of continuous cellulosic fibres with 12% moisture content, a titre of 1.80 dtex, a tenacity of 15.2 cN/tex and an elongation of 16.3%.

Example 12

404 parts by weight of the cellulose pulp as in Example 1 were wetted and defibrated as in Example 1 with a solution composed of 5000 parts by weight of water, 2 parts by weight of ascorbic acid and 0.52 part by weight of diethanolamine having pH=4.20. The hydrothermal treatment was carried out for 180 minutes in an autoclave at 160°C and a pressure of 0.58 MPa. The product was purified as in Example 1. 1033 parts by weight of a modified cellulose pulp were obtained having following properties: water content of 64.4% wt, a $DP_v$=276, a Pd=2.12, a CrI=66.7%, a WRV=72.2 % and an $E_H$=16.9 kJ/mol. 97 parts by weight of such modified cellulose were dissolved in an aqueous solution of sodium hydroxide as in Example 6 to obtain an alkaline cellulose solution containing 5.95% by weight of α-cellulose, 8.04% wt by weight of NaOH and having a ball viscosity of 33 seconds, a Kw*=112, and a stability of 72 hours at 15°. From such solution after filtration and deaeration a cellulosic film was formed as in Example 1.
There were obtained 36.8 parts by weight of a cellulosic film with 10% moisture content, a thickness of 0.036 mm, a strength of 52.7 MPa and an elongation of 16%.

Example 13

404 parts by weight of a cellulose pulp as in Example I were wetted and defibrated as in Example I with a solution at pH=4.46 composed of 5100 parts by weight of water, 2.45 parts by weight of citric acid and 2.153 parts by weight of a 25% ammonia water. The hydrothermal treatment was carried out for 165 minutes at 165°C and under a pressure of 0.62 MPa. The product was purified as in Example 1. 1050 parts by weight of the modified cellulose pulp were obtained with 65.5% moisture content, a $\overline{DP}_v$=390, a Pd=2.46, a CrI=65.2%, a WRV=70.6% and an $E_H$=16-19.2 kJ/mol. 109 parts by weight of such modified cellulose were mixed with 38 parts by weight of water, cooled down to 1°C and then 453 parts by weight of a 12% solution of sodium hydroxide, containing 25 parts by weight of urea and 4.2 parts by weight of zinc oxide were added. The dissolving was carried out for 60 minutes to obtain an alkaline cellulose solution at 8°C containing 6.17% by weight of α-cellulose and 7.98% by weight of NaOH having a ball viscosity of 140 seconds, a Kw* of 215, a stability of 50 hours at 15°C. From the solution, after filtration and deaeration, a cellulosic film was formed as in Example 1.
There were obtained 38.8 parts by weight of cellulosic film with a 8% moisture content, a thickness of 0.037 mm, a strength of 62.6 MPa and an elongation of 17.1%.

## Claims

1. A process for producing fibres, film, casings and other products from modified soluble cellulose by a hydrothermal treatment cellulose pulp, its dissolving in aqueous alkalines and coagulation from the alkaline solutions of cellulose **characterized in that** the initial cellulose is subjected to hydrothermal treatment with water and/or water steam at a temperature between 100°C to 200°C under a pressure in the range of 0.1 to 1.5 MPa with a water/cellulose weight ratio not lower than 1 : 1 in the presence of a complex activator composed of one of the following compounds or their blends: ascorbic acid, acetic acid, citric acid, formic acid, carbonic acid ammonium hydroxide, diethanolamine, guanidine carbonate, ammonium chloride, sodium citrate, wherein the applied amount of the activator calculated on cellulose is 0.001 - 0.5 % by weight, and wherein the produced, modified cellulose pulp is further **characterized by** a controlled structure including an average polymerization degree not less that 200, a polydispersity in the range of 1.5 - 3.0, a water retention value not less than 50, a hydrogen bond energy in the 10 - 20 kJ/mol range and a content of no more than 2% by weight of a part insoluble in aqueous alkali solutions, and wherein, after optional dying, is in dry or never dried condition, dissolved in an aqueous solution of alkali metal hydroxide at a temperature not lower than 0°C during 1-120 minutes, to obtain a homogenous alkaline spinning solution of cellulose with a cellulose concentration not lower than 1% by weight, a hydroxide content not higher than 10% by weight, a filterability coefficient not more than 1000, a solution stability of at least 48 hours at a temperature not lower then 15°C and a ball viscosity not less than 10 seconds, after which the obtained alkaline cellulose solution is filtered, dearated and next coagulated in water or an aqueous acid solution preferably sulphuric acid solution with the concentration of 0.1 to 30% by weight at a temperature of 10-30°C and the obtained products are washed with water to a neutral reaction and finished in a standard way.

2. The process according to Claim 1 **characterized in that** the produced fibres, film or casings are plasticized at a temperature in the range of 20-95°C in water or an aqueous solution of an acid like hydrochloric or sulphuric acid and/or a plasticizer like glycol or glycerol with simultaneous drawing by at least 10%.

3. The process according to Claim 1 **characterized in that** the initial cellulose pulp is, prior to the hydrothermal treatment, defibrated and swollen for 1 minute to 24 hours with a possible addition of a wetting agent at a temperature not lower than 10° preferably with agitation.

4. The process according to Claim 1 **characterized in that**, the aqueous solution of the alkali metals hydroxide contains zinc compounds preferably zinc oxide in an amount not less than 0.1 % by weight and/or urea in an amount not less than 1 % by weight.

## Patentansprüche

1. Verfahren zur Herstellung von Fasern, Folien und anderen Produkten aus modifizierter, löslicher Zellulose durch hydrothermale Behandlung von Zellulose-Pulpe, deren Auflösung in wässrigen Alkalien und Koagulation aus den alkalischen Lösungen der Zellulose, **dadurch gekennzeichnet, dass** die ursprüngliche Zellulose einer hydrothermalen Behandlung mit Wasser und/oder Wasserdampf bei einer Temperatur zwischen 100 und 200 °C und bei einem Druck in einem Bereich von 0,1 bis 1,5 Mpa und einem Gewichtsverhältnis Wasser/Zellulose von nicht weniger als 1:1 unterzogen wird in Gegenwart eines komplexen Aktivators, der zusammengesetzt ist aus einer der nachfolgenden Verbindungen oder deren Mischungen: Ascorbinsäure, Essigsäure, Zitronensäure, Ameisensäure, Kohlensäure-Ammoniumhydroxid, Diethanolamin, Guanidin-Karbonat, Ammoniumchlorid, Natriumcitrat, wobei die verwendete Menge an Aktivator berechnet auf die Zellulose 0,001 bis 0,5 Gewichts% beträgt, und wobei die hergestellte, modifizierte Zellulose-Pulpe weiterhin **gekennzeichnet ist durch** eine geregelte Struktur, beinhaltend einen mittleren Polymerisationsgrad von nicht weniger als 200, eine Polydispersität im Bereich von 1,5 bis 3,0, einen Wasser-Rückhalte-Wert von nicht weniger als 50, eine Wasserstoff-Bindungsenergie im Bereich von 10 bis 20 kJ/mol und einem Gehalt an in wässriger, alkalischer Lösung unlöslichen Anteilen von nicht mehr als 2 Gewichtsprozent und nachfolgend, nach optionalem Trocknen, in getrocknetem oder nie getrocknetem Zustand, in einer wässrigen Lösung eines Alkalimetall-Hydroxids bei einer Temperatur von nicht weniger als 0°C innerhalb 1 bis 120 Minuten aufgelöst wird, um eine homogene, alkalische Spinn-Lösung der Zellulose zu erhalten mit einer Zellulose-Konzentration von nicht weniger als 1 Gewichts%, einem Hydroxid-Gehalt von nicht mehr als 10 Gewichts%, einem Filtrationskoeffizienten von nicht mehr als 1000, einer Lösungs-Stabilität von mindestens 48 Stunden bezogen auf eine Temperatur von nicht weniger als 15 °C und einer Kugel-Viskosität von nicht weniger als 10 Sekunden, wonach die erhaltene, alkalische Zellulose-Lösung gefiltert, entlüftet und nachfolgend koaguliert wird in Wasser oder einer wässrigen Lösung einer Säure, vorzugsweise Schwefelsäurelösung mit einer Konzentration von 0,1 bis 30 Gewichts%, bei einer Temperatur von 10 bis 30 °C und die erhaltenen Produkte mit Wasser bis zur neutralen Reaktion gewaschen und auf übliche Art fertiggestellt werden.

2. Verfahren nach Anspruch 1, **dadurch gekennzeichnet, dass** die hergestellten Fasern, Folien oder Hüllen bei einer Temperatur im Bereich von 20 bis 95 °C plastifiziert werden in Wasser oder einer wässrigen Lösung einer Säure wie Salzsäure oder Schwefelsäure, und / oder einem Plastifizierer wie Glykol oder Glycerin, unter Gleichzeitiger Reckung um mindestens 10%.

3. Verfahren nach Anspruch 1, **dadurch gekennzeichnet, dass** die ursprüngliche Zellulose-Pulpe, vor der hydrothermalen Behandlung, zerfasert und für 1 Minute bis 24 Stunden, wahlweise unter Zugabe eines Benetzungs-Mittels, bei einer Temperatur von nicht weniger als 10 °C, vorzugsweise unter Durchmischung, gequollen wird.

4. Verfahren nach Anspruch 1, **dadurch gekennzeichnet, dass** die wässrige Lösung des Alkalimetall-Hydroxids Zink-Verbindungnen, vorzugsweise Zinkoxid, in einer Menge von nicht weniger als 0,1 Gewichts%, und/oder Harnstoff in einer Menge von nicht weniger als 1 Gewichts%, enthält.

## Revendications

1. Procédé pour fabriquer des fibres, des films, des enveloppes et d'autres produits à partir de cellulose soluble modifiée par un traitement hydrothermique de pâte de cellulose, sa dissolution dans des alcalins aqueux, et coagulation de cellulose à partir des solutions alcalines, **caractérisé en ce que** la cellulose initiale est soumise à un traitement hydrothermique avec de l'eau et/ou de la vapeur d'eau à une température comprise entre 100°C et 200°C sous une pression se situant dans la gamme de 0,1 à 1,5 MPa avec un rapport pondéral eau/cellulose d'au moins 1 : 1 en présence d'un activateur complexe constitué de l'un des composés suivants ou de leurs mélanges : acide ascorbique, acide acétique, acide citrique, acide formique, acide carbonique, hydroxyde d'ammonium, diéthanolamine, carbonate de guanidine, chlorure d'ammonium, citrate de sodium, dans lequel la quantité appliquée de l'activateur, calculée par rapport à la cellulose, est de 0,001 - 0,5 % en poids, et dans lequel la pâte de cellulose modifiée produite se **caractérise en outre par** une structure contrôlée incluant un degré moyen de polymérisation d'au moins 200, une polydispersité se situant dans la gamme de 1,5 - 3,0, un indice d'hydratation d'au moins 50, une énergie de liaison hydrogène se situant dans la gamme de 10 - 20 kJ/mol et une teneur ne dépassant pas 2 % en poids d'une partie insoluble dans les solutions alcalines aqueuses, et dans lequel, après séchage facultatif, est, dans un état sec ou sans aucun séchage, dissoute dans une solution aqueuse d'hydroxyde de métal alcalin à une température d'au moins 0°C pendant 1 à 120 minutes, pour obtenir une solution alcaline homogène de filage de cellulose avec une concentration de cellulose d'au moins 1 % en poids, une teneur en hydroxyde ne dépassant pas 10 % en poids, un coefficient de filtrabilité ne dépassant pas 1000, une stabilité en solution d'au moins 48 heures à une température d'au moins 15°C et une viscosité par chute de bille d'au moins 10 secondes, après quoi la solution alcaline de cellulose obtenue est filtrée, désaérée puis coagulée dans de l'eau ou une solution aqueuse acide, de préférence une solution d'acide sulfurique avec une concentration de 0,1 à 30 % en poids à une température de 10-30°C, et les produits obtenus sont lavés à l'eau jusqu'à la neutralité et finis d'une manière classique.

2. Procédé selon la revendication 1 **caractérisé en ce que** les fibres, les films ou les enveloppes produits sont plastifiés à une température se situant dans la gamme de 20-95 °C dans de l'eau ou une solution aqueuse d'un acide comme l'acide chlorhydrique ou sulfurique et/ou d'un plastifiant comme le glycol ou le glycérol avec un étirage simultané d'au moins 10 %.

3. Procédé selon la revendication 1 **caractérisé en ce que** la pâte de cellulose initiale est, préalablement au traitement hydrothermique, défibrée et gonflée pendant 1 minute à 24 heures avec une possible addition d'un agent mouillant à une température d'au moins 10°C, de préférence sous agitation.

4. Procédé selon la revendication 1 **caractérisé en ce que** la solution aqueuse de l'hydroxyde de métal alcalin contient des composés du zinc, de préférence de l'oxyde de zinc, dans une quantité d'au moins 0,1 % en poids et/ou de l'urée dans une quantité d'au moins 1 % en poids.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4634470 A
- JP 58244337 A
- PL 167776
- PL 167519
- PL P323281
- PL P324910
- EP 0918101 A

**Non-patent literature cited in the description**

- *Polymer Journal,* 1988, vol. 20, 447-457
- *Cellulose Chemistry and Technology,* 1990, vol. 24, 23-31237-249
- *periodical Cellulose Chemistry and Technology,* 1980, vol. 14, 893